# EUROPEAN PATENT APPLICATION

(11) **EP 3 189 946 A1**
(43) Date of publication of application: **12.07.2017**
(21) Application number: 16150509.4
(22) Date of filing: 08.01.2016
(51) Int. Cl.: B25J 9/04

(54) **AN INDUSTRIAL ROBOT WITH A MODULAR LOWER ARM**

(71) Applicant: ABB Schweiz AG, 5400 Baden (CH)
(72) Inventor: LUNDBÄCK, Daniel, 723 55 Västerås (SE)
(74) Representative: Savela, Reino Aleksi

(57) **Abstract**

An industrial robot (10) comprises a base (20) configured to be stationary, a carousel (30) rotatable in relation to the base (20) about a first axis (210), a lower arm (40) rotatable in relation to the carousel (30) about a second axis (80), and an upper arm (50) rotatable in relation to the lower arm (40) about a third axis (140). The lower arm (40) comprises a first branch (220) and a second branch (230). There are a first bearing arrangement (120) between the carousel (30) and the first branch (220), a second bearing arrangement (180) between the first branch (220) and the upper arm (50), a third bearing arrangement (240) between the carousel (30) and the second branch (230), and a fourth bearing arrangement (250) between the second branch (230) and the upper arm (50). The robot (10) is configured to be fully functional in absence of the second branch (230), although the precision of the robot is improved when the second branch (230) is present. The second branch (230) is thereby optional, and the precision of the robot (10) can be improved when necessary while keeping existing bearing arrangements of the robot (10) intact.

## Description

### TECHNICAL FIELD

The present invention relates to serial link industrial robots for high performance applications.

### BACKGROUND ART

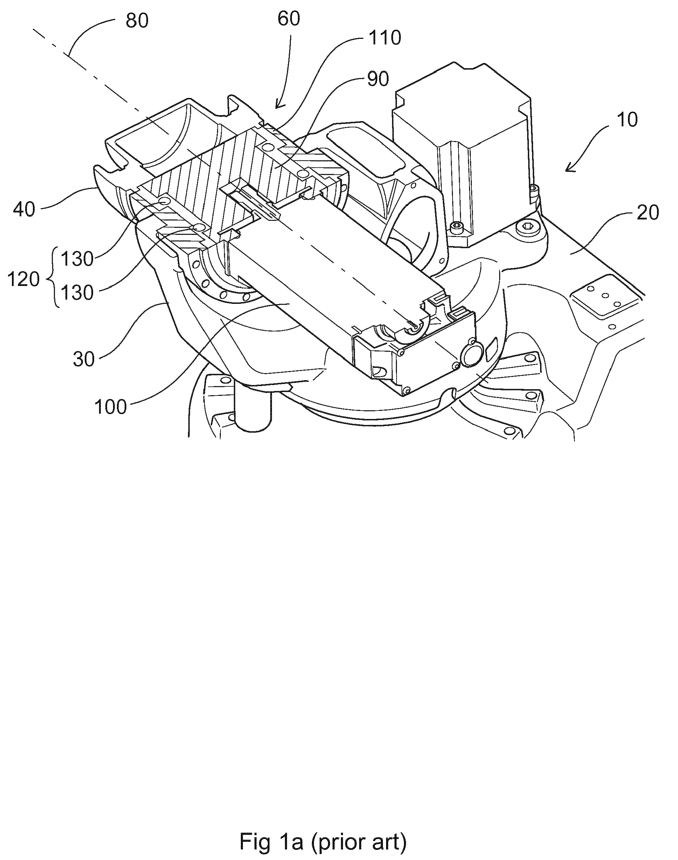

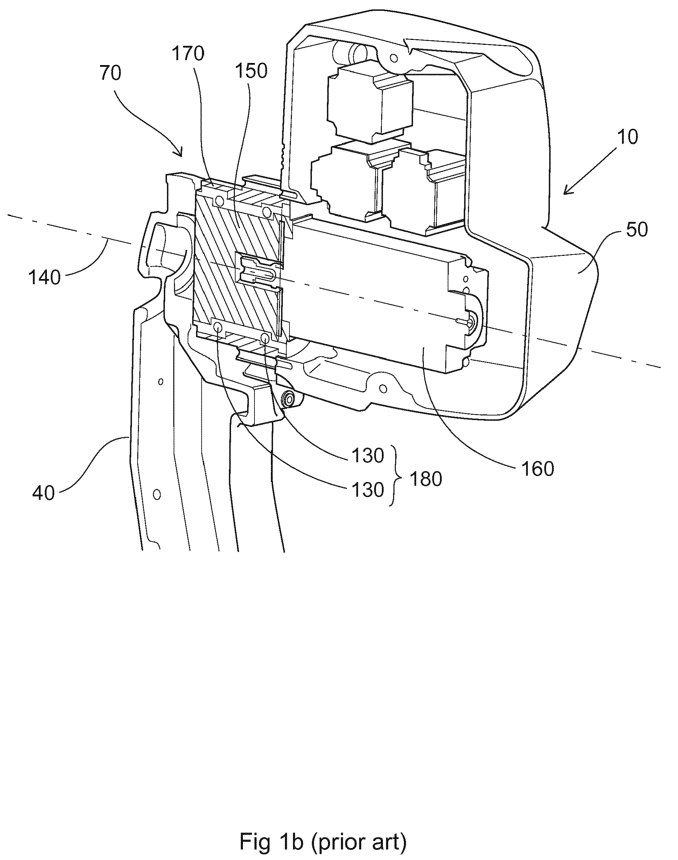

Referring to figures 1a and 1b, an industrial robot 10 of model IRB 2600 from ABB comprises a base 20, a carousel 30, a lower arm 40, an upper arm 50, a first gearbox 60 between the carousel 30 and the lower arm 40, and a second gearbox 70 between the lower and upper arms 40, 50. It is conventionally known to arrange the carousel 30 and the lower arm 40 as well as the lower arm 40 and the upper arm 50 of a serial link robot 10 in a single-sided manner such that at each respective joint one of the elements is on one side of another of the elements in the direction of the respective axis.

Referring to figure 1a, a cross section through a second axis 80 of the robot 10 is shown. A first gearbox body 90 is arranged immobile in relation to the lower arm 40, and a first servo motor 100 for rotating an input side of the first gearbox 60 is connected to the first gearbox body 90. It is to be understood that the interior of the first gearbox 60 is shown only schematically. A first gearbox output 110 is arranged immobile in relation to the carousel 30, and actuation of the first servo motor 100 thereby causes the lower arm 40 to rotate in relation to the carousel 30. The first gearbox 60 comprises a first gearbox bearing 120 in the form of two rows of balls 130 as rolling elements. The first gearbox bearing 120 is dimensioned to bear all the load between the carousel 30 and the lower arm 40 such that no additional bearing between the same is needed for the robot 10 IRB 2600 to be fully functional. Thereby the first gearbox bearing 120 can be considered to constitute a first bearing arrangement 120, which first bearing arrangement 120 is arranged between the carousel 30 and the lower arm 40 and integrated into the first gearbox 60. In the context of the present disclosure the expression "all the load" refers to any load that is exerted to a respective joint as a result of a robot operation. The maximum value of such load depends on the rated payload of the respective robot 10.

Referring to figure 1b, a cross section through a third axis 140 of the robot 10 IRB 2600 is shown. A second gearbox body 150 is arranged immobile in relation to the lower arm 40, and a second servo motor 160 for rotating an input side of the second gearbox 70 is connected to the second gearbox body 150. A second gearbox output 170 is arranged immobile in relation to the upper arm 50, and actuation of the second servo motor 160 thereby causes the upper arm 50 to rotate in relation to the lower arm 40. The second gearbox 70 comprises a second gearbox bearing 180 in the form of two rows of balls 130. The second gearbox bearing 180 is dimensioned to bear all the load between the lower and upper arms 40, 50 such that no additional bearing between the same is needed for the robot 10 IRB 2600 to be fully functional. Thereby the second gearbox bearing 180 can be considered to constitute a second bearing arrangement 180, which second bearing arrangement 180 is arranged between the lower and upper arms 40, 50 and integrated into the second gearbox 70.

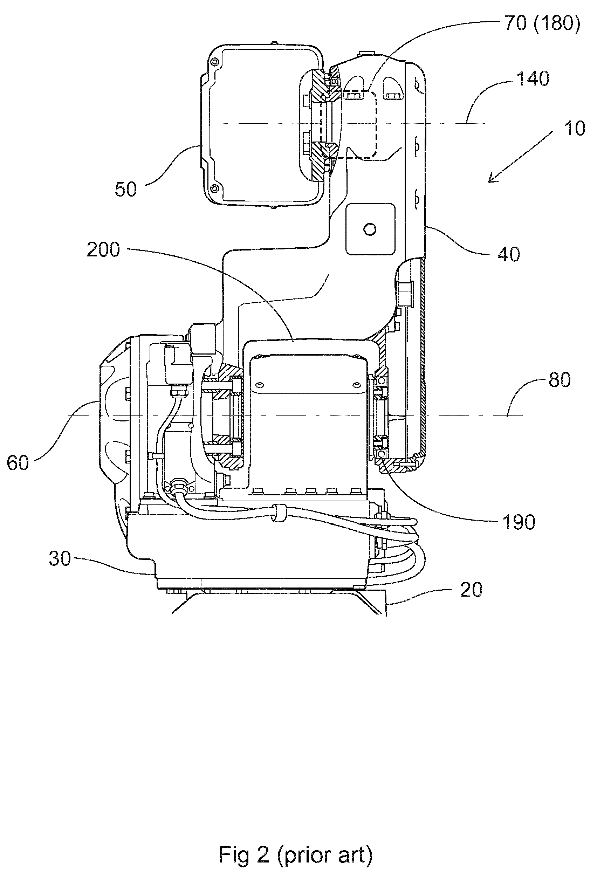

Referring to figure 2, an industrial robot 10 of model IRB 140 from ABB comprises a base 20, a carousel 30, a lower arm 40, an upper arm 50, a first gearbox 60 at a second axis 80 between carousel 30 and the lower arm 40, and a second gearbox 70 at a third axis 140 between the lower and upper arms 40, 50. The second gearbox 70 of figure 2 corresponds to the second gearbox 70 of figure 1b, and a corresponding second bearing arrangement 180 between the lower and upper arms 40, 50 can be considered to be integrated into the second gearbox 70 of IRB 140. The first gearbox 60 of IRB 140 also comprises a first gearbox bearing (not shown) supporting the elements of the same in a rotating relation to each other, and also partially supporting the lower arm 40 in relation to the carousel 30. However, a respective first bearing arrangement between the carousel 30 and the lower arm 40 of IRB 140 cannot be considered to be integrated into the first gearbox 60 since in addition to the first gearbox bearing it comprises a console bearing 190 at a console 200 that is part of the carousel 30. The console bearing 190 is provided for additionally supporting the lower arm 40 in relation to the carousel 30, and neither of the first gearbox bearing and the console bearing 190 is dimensioned to bear all the load between the carousel 30 and the lower arm 40 alone. The robot 10 IRB 140 can thereby be considered to comprise both a single-sided joint arrangement (the lower and upper arms 40, 50) and a double-sided joint arrangement (the carousel 30 and the lower arm 40).

US20150283710A1 (figure 7) discloses a manipulator comprising arms consisting of two branches extending between respective two pairs of bearings.

While in most applications the single-sided joint arrangements present in the robots 10 IRB 2600 and IRB 140 are sufficient, in certain applications it would be desirable to improve the precision of the robots 10 by increasing the stiffness of the same at the second and/or third axes.

### SUMMARY OF THE INVENTION

One object of the invention is to provide a robot where an improved precision is optional.

One object of the invention is to provide a method for improving a precision of an existing fully functional industrial robot.

These objects are achieved by the device according to appended claim 1 and the method according to appended claim 14.

The invention is based on the realization that by making a second branch of a lower arm in a robot optional, the precision of the robot can be improved when necessary while keeping existing bearing arrangements of the robot intact.

According to a first aspect of the invention, there is provided an industrial robot comprising: a lower arm rotatable in relation to a first robot element about a second axis, the lower arm comprising a first branch and a second branch, an upper arm rotatable in relation to the lower arm about a third axis, a first bearing arrangement between the first robot element and the first branch, a second bearing arrangement between the first branch and the upper arm, a third bearing arrangement between the first robot element and the second branch, and a fourth bearing arrangement between the second branch and the upper arm. The robot is configured to be fully functional in absence of the second branch.

According to one embodiment of the invention, the robot further comprises a base configured to be stationary, the first robot element being a carousel rotatable in relation to the base about a first axis.

According to one embodiment of the invention, the second axis is perpendicular to the first axis.

According to one embodiment of the invention, the third axis is parallel to the second axis.

According to one embodiment of the invention, the base is configured to be mounted against a planar foundation, and the first axis is perpendicular to the plane of the foundation.

According to one embodiment of the invention, the first bearing arrangement is dimensioned to bear all the load between the carousel and the lower arm.

According to one embodiment of the invention, the first bearing arrangement comprises at least two rows of rolling elements.

According to one embodiment of the invention, the first bearing arrangement is integrated into a first gearbox.

According to one embodiment of the invention, the second bearing arrangement is dimensioned to bear all the load between the lower and upper arms.

According to one embodiment of the invention, the second bearing arrangement comprises at least two rows of rolling elements.

According to one embodiment of the invention, the second bearing arrangement is integrated into a second gearbox.

According to one embodiment of the invention, the first robot element comprises a first shaft on which the third bearing arrangement is configured to be arranged, the first shaft being configured to be optional.

According to one embodiment of the invention, the upper arm comprises a second shaft on which the fourth bearing arrangement is configured to be arranged, the second shaft being configured to be optional.

According to a second aspect of the invention, there is provided a method for improving a precision of a fully functional industrial robot comprising a lower arm with a first branch being rotatable in relation to a first robot element about a second axis, an upper arm rotatable in relation to the lower arm about a third axis, a first bearing arrangement between the first robot element and the first branch, and a second bearing arrangement between the first branch and the upper arm. The method comprises the step of providing the lower arm with a second branch arranged rotatable in relation to the first robot element and to the upper arm by means of respective third and fourth bearing arrangements.

According to one embodiment of the invention, the method further comprises the steps of: providing the robot with an optional first shaft on which the third bearing arrangement is configured to be arranged, and providing the robot with an optional second shaft on which the fourth bearing arrangement is configured to be arranged.

### BRIEF DESCRIPTION OF THE DRAWINGS

The invention will be explained in greater detail with reference to the accompanying drawings, wherein
- figure: 1a shows a second joint of an industrial robot IRB 2600 in cross-section,
- figure: 1b shows a third joint of an industrial robot IRB 2600 in cross-section,
- figure 2: shows second and third joints of an industrial robot IRB 140, and
- figure 3: shows an industrial robot according to one embodiment of the invention.

### DESCRIPTION OF PREFERRED EMBODIMENTS

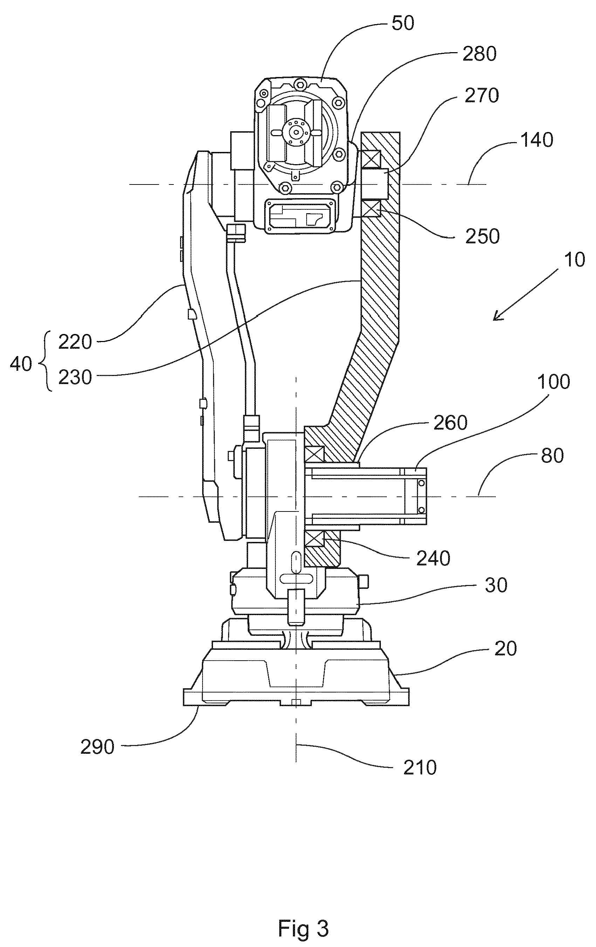

Referring to figure 3, an industrial robot 10 according to an embodiment of the invention comprises a base 20, a carousel 30 rotatable in relation to the base 20 about a first axis 210, a lower arm 40 rotatable in relation to the carousel 30 about a second axis 80, and an upper arm 50 rotatable in relation to the lower arm 40 about a third axis 140. The base 20 has three feet 290 defining a common plane, and is thereby configured to be mounted against a planar foundation such as a floor. The first axis 210 is perpendicular to the plane of the foundation, the second axis 80 is perpendicular to the first axis 210, and the third axis 140 is parallel to the second axis 80.

The lower arm 40 comprises two branches 220, 230 of which a first branch 220 is arranged in relation to the carousel 30 by means of a first bearing arrangement 120 according to figure 1a, and in relation to the upper arm 50 by means of a second bearing arrangement 180 according to figure 1b. That is, between the first branch 220 and the carousel 30 there is a first gearbox 60 with an integrated first bearing arrangement 120 dimensioned to bear all the load between the carousel 30 and the lower arm 40, and between the first branch 220 and the upper arm 50 there is a second gearbox 70 with an integrated second bearing arrangement 180 dimensioned to bear all the load between the lower and upper arms 40, 50.

A second branch 230 is arranged in relation to the carousel 30 by means of a third bearing arrangement 240, and in relation to the upper arm 50 by means of a fourth bearing arrangement 250. Because the first and second bearing arrangements 120, 180 are dimensioned to bear all the load between the carousel 30 and the lower arm 40, and between the first branch 220 and the upper arm 50, respectively, the robot 10 is fully functional in absence of the second branch 230. However, the precision of the robot 10 is improved when the second branch 230 is present. Consequently, the second branch 230 can be configured to be removable, and it is only introduced as an option when an improved precision is required.

In order to be able to provide the robot 10 with the second branch 230 the carousel 30 is provided with a first shaft 260 whose axis coincides with the second axis 80, and the upper arm 50 is provided with a second shaft 270 whose axis coincides with the third axis 140. The first and second shafts 260, 270 can be optional as they only need to be present when the second branch 230 is present. The first shaft 260 is hollow, and it is attached to the first gearbox 60 such that it partially encloses a first servo motor 100 that actuates the lower arm 40. The second shaft 270 is integrated into a cover plate 280 on the upper arm 50. When the second branch 230 is not present the first shaft 260 becomes redundant and can be omitted, and likewise the second shaft 270 becomes redundant and consequently a cover plate 280 with no integrated second shaft 270 can be used.

The invention is not limited to the embodiments shown above, but the person skilled in the art may modify them in a plurality of ways within the scope of the invention as defined by the claims. For example, the bearing arrangements 120, 180, 240, 250 may instead of two rows of balls 130 consist of many alternative types of bearings such as a single cross roller bearing or a plurality of the same.

## Claims

1. An industrial robot (10) comprising:
a lower arm (40) rotatable in relation to a first robot element (30) about a second axis (80), the lower arm (40) comprising a first branch (220) and a second branch (230),
an upper arm (50) rotatable in relation to the lower arm (40) about a third axis (140),
a first bearing arrangement (120) between the first robot element (30) and the first branch (220),
a second bearing arrangement (180) between the first branch (220) and the upper arm (50),
a third bearing arrangement (240) between the first robot element (30) and the second branch (230), and
a fourth bearing arrangement (250) between the second branch (230) and the upper arm (50),
**characterized in that** the robot (10) is configured to be fully functional in absence of the second branch (230).

2. An industrial robot (10) according to claim 1, further comprising a base (20) configured to be stationary, the first robot element (30) being a carousel (30) rotatable in relation to the base (20) about a first axis (210).

3. An industrial robot (10) according claim 2, wherein the second axis (80) is perpendicular to the first axis (210) .

4. An industrial robot (10) according to any of the preceding claims, wherein the third axis (140) is parallel to the second axis (80).

5. An industrial robot (10) according to any of claims 2 to 4, wherein the base (20) is configured to be mounted against a planar foundation, and the first axis (210) is perpendicular to the plane of the foundation.

6. An industrial robot (10) according to any of the preceding claims, wherein the first bearing arrangement (120) is dimensioned to bear all the load between the carousel (30) and the lower arm (40).

7. An industrial robot (10) according to any of the preceding claims, wherein the first bearing arrangement (120) comprises at least two rows of rolling elements (130) .

8. An industrial robot (10) according to any of the preceding claims, wherein the first bearing arrangement (120) is integrated into a first gearbox (60).

9. An industrial robot (10) according to any of the preceding claims, wherein the second bearing arrangement (180) is dimensioned to bear all the load between the lower and upper arms (40, 50).

10. An industrial robot (10) according to any of the preceding claims, wherein the second bearing arrangement (180) comprises at least two rows of rolling elements (130) .

11. An industrial robot (10) according to any of the preceding claims, wherein the second bearing arrangement (180) is integrated into a second gearbox (70).

12. An industrial robot (10) according to any of the preceding claims, wherein the first robot element (30) comprises a first shaft (260) on which the third bearing arrangement (240) is configured to be arranged, the first shaft (260) being configured to be optional.

13. An industrial robot (10) according to any of the preceding claims, wherein the upper arm (50) comprises a second shaft (270) on which the fourth bearing arrangement (250) is configured to be arranged, the second shaft (270) being configured to be optional.

14. A method for improving a precision of a fully functional industrial robot (10) comprising a lower arm (40) with a first branch (220) being rotatable in relation to a first robot element (30) about a second axis (80), an upper arm (50) rotatable in relation to the lower arm (40) about a third axis (140), a first bearing arrangement (120) between the first robot element (30) and the first branch (220), and a second bearing arrangement (180) between the first branch (220) and the upper arm (50), the method comprising the step of:
- providing the lower arm (40) with a second branch (230) arranged rotatable in relation to the first robot element (30) and to the upper arm (50) by means of respective third and fourth bearing arrangements (240, 250) .

15. A method according to claim 14, wherein the method further comprises the steps of:
- providing the robot (10) with an optional first shaft (260) on which the third bearing arrangement (240) is configured to be arranged, and
- providing the robot (10) with an optional second shaft (270) on which the fourth bearing arrangement (250) is configured to be arranged.
